Europäisches Patentamt

European Patent Office

Office européen des brevets

(11) Veröffentlichungsnummer : **0 035 818**
**B1**

(12)

# EUROPÄISCHE PATENTSCHRIFT

(45) Veröffentlichungstag der Patentschrift :
04.03.87

(51) Int. Cl.⁴ : **B 65 G   1/06**

(21) Anmeldenummer : **81200256.6**

(22) Anmeldetag : **06.03.81**

(54) Lagerungseinrichtung für Produkte unter Benutzung von Trägern.

(30) Priorität : 06.03.80 NL 8001352
11.08.80 NL 8004549

(43) Veröffentlichungstag der Anmeldung :
16.09.81 Patentblatt 81/37

(45) Bekanntmachung des Hinweises auf die Patenterteilung : 04.03.87 Patentblatt 87/10

(84) Benannte Vertragsstaaten :
AT BE CH DE FR GB IT LI LU NL SE

(56) Entgegenhaltungen :
FR-A- 2 313 288
FR-A- 2 355 739
FR-A- 2 391 124
NL-A- 7 709 515
NL-B-   153 494

(73) Patentinhaber : Technisch Ontwikkelingsbureau van
Elten B.V.
Baron van Nagellstraat 174
NL-3700 AA Barneveld (NL)

(72) Erfinder : van Elten, Gerrit Jan
Tromplaan 1
NL-3781 TC Voorthuizen (NL)
Erfinder : Hurkmans, Antonius
Prof. Buyslaan 71
NL-3741 DB Baarn (NL)
Erfinder : de Vries, Hugo Victor
Hamburgerweg 144
NL-3851 EP Ermelo (NL)

(74) Vertreter : Kooy, Leendert Willem et al
OCTROOIBUREAU VRIESENDORP & GAADE P.O.
Box 266
NL-2501 AW The Hague (NL)

## Beschreibung

Die Erfindung bezieht sich auf eine Lagerungseinrichtung für Produkte unter Benutzung von Trägern, bestehend aus einer eine Anzahl von Etagen umfassenden Stellage mit einer Zufuhrseite und einer gegenüberliegenden Entnahmeseite, wobei an der Zufuhrseite mindestens ein Zufuhrförderer und mindestens eine längs dieser Seite verfahrbare Zufuhrhebevorrichtung mit einer Einrichtung für das Einbringen der Träger in die Stellage sowie an der Entnahmeseite mindestens eine längs dieser verfahrbare Entnahmehebe- vorrichtung und mindestens ein Entnahmeförde- rer angeordnet sind, mit mindestens einem Förderer in jeder Etage der Stellage, welcher auf der Entnahmeseite der Stellage mit einer an der Entnahmehebevorrichtung vertikal verfahrbar angeordneten Antriebsvorrichtung kuppelbar ist.

Eine derartige Einrichtung ist aus der niederländische Patentanmeldung 77 09515 bekannt. Bei dieser bekannten Lagerungseinrichtung und der aus der niederländischen Patentschrift 154 3- 94 bekannten Einrichtung werden die Produkte auf einem Träger liegend mittels einer Schubeinrichtung bis auf den passiven Etageförderer geschoben, wobei die sich schon auf dem Etageförderer befindlichen Träger weitergeschoben werden mit dem Nachteil, dass grosse Schubkräfte entstehen können, welche durch die Träger aufgenommen werden können müssen.

Gemäss der niederländischen Patentschrift 15- 4 394 werden Produkte der Lagerung dadurch entnommen, dass in der ganzen Länge des passiven Förderers eine geschlossene Reihe von wohl oder nicht mit Produkten beladenen Trägern vorhanden ist, wodurch während des Einschiebens eines Trägers an der Zufuhrseite ein Träger an der Entnahmeseite ausgeschoben wird, welcher übergenommen und weitertransportiert wird. Der Nachteil dieses Systems ist, ausser der grossen Schubkraft, dass jeweils eine vollständige Reihe von Trägern vorhanden sein muss und dass zwei Hebevorrichtungen an Zufuhr- und Entnahmeseite zusammenarbeiten müssen, um die Träger mit Produkten abliefern zu können.

Das Verfahren zum Entnehmen von Produkten gemäss der niederländischen Patentanmeldung 77 09515 besteht darin, dass für die Lieferung von Produkten jeder passive Rollenförderer mit einem von der Entnahmehebevorrichtung aus angetriebenen Sperrenmechanismus versehen ist, um die Träger mit Produkten über Rollenförderer bis in die Entnahmehebevorrichtung weiterzuschieben.

Die Lagerungsvorrichtung gemäss der Erfindung unterscheidet sich in Hinsicht auf die bekannten Einrichtungen dadurch, dass auch an der Zufuhrhebevorrichtung eine Antriebsvorrichtung vertikal verfahrbar angeordnet ist, welche jeweils mit dem zufuhrseitigen Ende eines Förderers kuppelbar ist und dass jeder Förderer ein Trag-Schrittförderer ist, bestehend aus einer profilierten Tragrinne, deren Bodenteil in Längsrichtung mit zwei Tragflächen, zwei V-förmigen Nuten und zwei Stützflächen versehen ist, und aus einem profilierten Trag-Transportbalken mit ebener Oberseite, welcher an der Unterseite mit quer zur Transportrichtung montierten Wellen versehen ist, auf welchen Tragsegmente schwenkbar montiert sind, welche Tragsegmente eine Felge mit einer spiralförmigen Auflauffläche mit Anschlagflächen und einer Gleitfläche besitzen, wo- bei der Querschnitt der Felge V-förmig ist, mit im Bereich der spiralförmigen Auflauffläche grösserer und im Bereich der Gleitfläche kleinerer Breite als die Breite des Bodens der V-förmigen Nuten in der Tragrinne.

Die Trag-Schrittförderer gemäss der Erfindung sind mit einem Hebebalken mit flacher Oberseite versehen, welcher Hebebalken die Produkte oder Träger mit Produkten zuerst vom Tragbalken hebt, danach über eine bestimmte Distanz transportiert und wieder auf den Tragbalken abstellt, worauf der Hebebalken in der niedrigsten Lage unter den Produkten hindurch zurückgezogen wird für den nächsten Transportzyklus. Hierdurch wird erreicht, dass verhältnismässig schwache Kasten, Schachteln oder Trays ohne Beschädigung durch Schubkräfte in einem kontinuierlichen Strom transportiert werden können.

Um die Lagerungskosten möglichst niedrig zu halten, ist es bei den bekannten Einrichtungen zur Lagerung von Produkten und zur Zusammen- stellung von Aufträgen dieser Produkte notwendig die Produkte, eventuell in Kasten, Schachteln und/oder Kisten verpackt, auf Paletten oder Tragbretter zu stapeln, wodurch die Lagerungskosten, z. B. pro Meter Förderlänge, zu einer wirtschaftlich akzeptierbaren Höhe reduziert werden, aber wodurch auch die gelagerten Einheiten grösser werden. Die Lagerung von Produkten in Kasten, Schachteln und/oder Kisten, ohne Anwendung von Paletten oder Tragbrettern, ist für diese bekannten Vorrichtungen nicht möglich und/oder zu teuer.

Neben den Kosten von Anschaffung von Paletten und dergleichen haben diese Hilfsmittel den Nachteil dass, falls Aufträge zusammengestellt werden müssen mit als Einheit ein Kasten, eine Schachtel oder Kiste, die Paletten und dergleichen für die Zusammenstellung der Aufträge wieder ganz oder teilweise entladen werden müssen, während die leergekommenen Paletten abgeführt, gereinigt und gelagert werden müssen.

Weiter kann nicht davon ausgegangen werden, dass die Kasten auf den Paletten sofort zur Verfügung liegen für die Zusammenstellung von Aufträgen, weil das Abnehmen eines Kastens von einer Palette nach dem Zuführen dieser Palette, oder das sich Begeben zu dieser Palette, viel Zeit kostet, während das automatische Abnehmen eines solchen Kastens verhältnismässig hohe Investitionen erfordert und viel Raum in Anspruch nimmt.

Die Ausführung des Trag-Schrittförderers gemäss der Erfindung ist derart, dass dieser einfach und billig fabriziert werden kann, so dass die wirtschaftliche Notwendigkeit der Anwendung von Paletten hinfällig wird.

Die Produkte, Kasten, Schachteln und/oder Kisten werden als selbständige und gesonderte Einheiten transportiert, gelagert und gesammelt, ohne dass dabei Hilfsmittel wie Paletten, Kontainer oder Rollwagen notwendig sind, wobei zugleich die Anforderung erfüllt wird, dass die Produkte in derselben Reihenfolge, in der sie in die Stellage gebracht worden sind, aus der Stellage abgeführt werden können.

Das Sammeln von Aufträgen in kleinen Einheiten ist besonders wichtig für die Lebensmittelindustrie, insbesondere für Milchdistributionsstationen, wobei Flaschen oder Kartons in Kasten transportiert werden.

Wegen der Administration des Lagerungsbestandes ist es vorteilhaft, dass auf jedem Lagerungsförderer nur eine Artikelsorte gelagert wird. Die Entnahmehebevorrichtungen können unmittelbar von den Etageförderern ab Aufträge sammeln.

Falls die Entnahmehebevorrichtungen aus vielen Artikeln bestehende Aufträge zusammenstellen müssen, werden die Hebevorrichtungen zugleich die Artikel aus vielen verschiedenen Etagenförderern holen müssen, so dass die Entnahmehebevorrichtungen auch vielfach die Stelle wechseln müssen, was Zeit kostet. Hierdurch wird die Geschwindigkeit, womit aus vielen verschiedenen Artikelsorten bestehende Aufträge gesammelt werden können, verringert.

Falls eine hohe Geschwindigkeit für das Sammeln von Aufträgen notwendig ist, kann man eine oder mehrere gesonderte Auftragsammlungsstationen, welche noch näher beschrieben werden, benutzen. Falls man beabsichtigt, Aufträge mit nicht gängigen Artikeln oder mit besonderen Produkten zu komplettieren mittels eines von Hand bedienten « Flow-rack », dann kann dieses « Flow-rack » von der Lagerung aus automatisch angefüllt werden, wie noch näher beschrieben wird.

Es wird darauf hingewiesen, dass aus der FR-A-2 391 124 ein Trag-Schrittförderer für Lagerungseinrichtungen bekannt ist, wobei jedoch jeder Förderer eine eigene eingebaute Antriebsvorrichtung hat, sowohl für einen Hebebalken, als für einen Transportbalken. Der Hebebalken ist mit Keilen versehen, auf denen der Transportbalken mit kugelgelagerten Rollen ruht, die auf Querachsen montiert sind. Der U-förmige Transportbalken ist mit U-förmigen Öffnungen in den Flanschen auf Querachsen gelagert, die mit Rädern in Form von Kugellagern in Schienenprofilen verfahrbar sind. Hierdurch ergibt sich eine aufwendige und teure Konstruktion.

Bei einer Vorzugsausführungsform der Lagerungseinrichtung gemäss der Erfindung besteht der Trag-Schrittförderer aus kaltgewalzten Profilen aus Stahlblech.

Durch Anwendung dieser Massnahme können die Trag-Schrittförderer und damit auch die ganze Lagerungsvorrichtung relativ billig hergestellt werden.

Nachfolgend wird die Erfindung anhand der Zeichnung mit einigen Ausführungsbeispielen näher erläutert.

Figur 1 ist eine perspektivische Ansicht einer Lagerungsvorrichtung nach der Erfindung.

Figur 2 ist ein teilweiser senkrechter Durchschnitt und eine teilweise Seitenansicht der als Paternosterlift ausgeführten Zufuhrhebeeinrichtung.

Figur 3 ist ein teilweiser Querschnitt und eine teilweise Obenansicht des Paternosterliftes nach Figur 2 sowie der Übergabevorrichtungen der Träger mit den Produkten von den Zufuhrförderern in die Zufuhrhebeeinrichtung und aus der Zufuhrhebeeinrichtung in die Stellage.

Figur 4 ist ein Querschnitt einer Ausführungsform des bei der Lagerungsvorrichtung nach der Erfindung angewandten Trag-Schrittförderers, der im linken Teil von Figur 4 in Ruhestellung steht und im rechten Teil von Figur 4 in Transportstellung.

Figur 5 ist ein teilweiser Querschnitt nach der Linie V-V in Figur 4 und

Figur 6 ist ein teilweiser Querschnitt nach der Linie VI-VI in Figur 4.

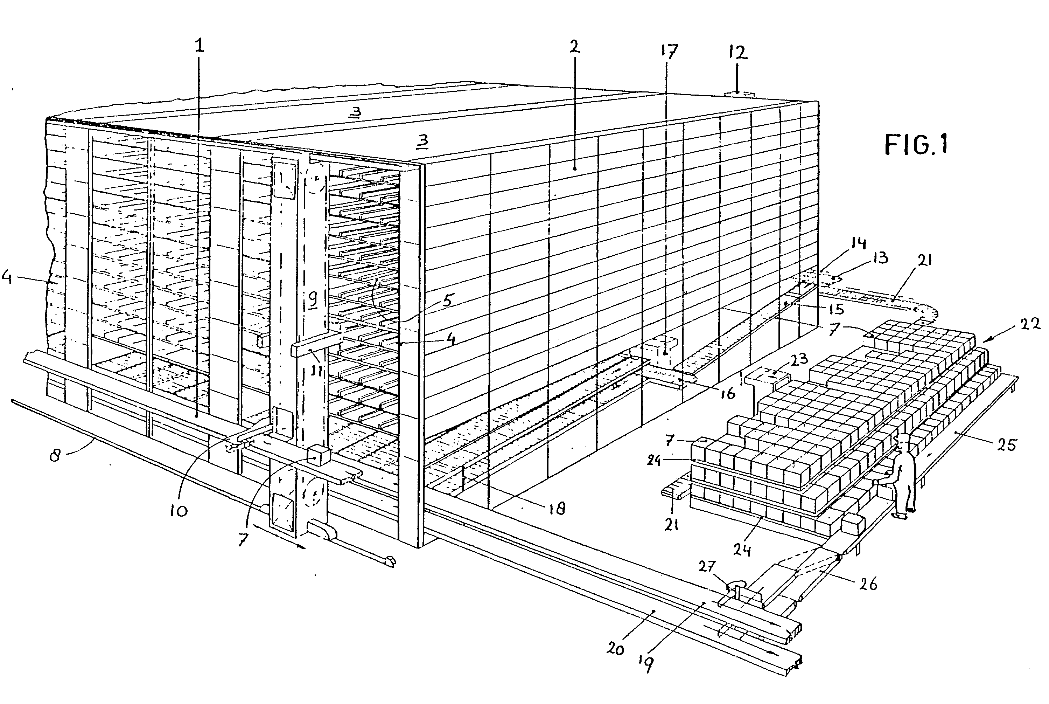

Die Kasten, welche mit vollen Flaschen oder anderen Verpackungen gefüllt sind, werden von den Produktionseinheiten aus mittels eines oder mehrerer Zufuhrförderer 1 der Lagerungsstellage 2 zugeführt. Dabei kann die Anzahl Zufuhrförderer 1 gleich sein der Anzahl Produktionseinheiten, welche nicht in Figur 1 dargestellt sind.

Die Lagerungsstellage 2, die in Figur 1 dargestellt ist, besteht aus einer Anzahl, zum Beispiel sieben, nebeneinander stehenden Fächern 3, die in senkrechter Richtung unterteilt sind in eine Anzahl, zum Beispiel dreizehn, Etagen. In jeder Etage 4 liegen zum Beispiel acht Etagen förderer 5 nebeneinander, die in üblicher Weise mittels Tragbalken 6 der Stellage 2 getragen sind. In jedem Etagen förderer können zum Beispiel fünfzig gefüllte Kasten 7 gelagert werden.

An der Zufuhrseite der Stellage sind auf Schienen 8 ein oder mehrere Paternosteraufzüge fahrbar, wobei jeder Aufzug 9 im Prinzip über die ganze Länge der Stellage 2 fahrbar ist und positioniert werden kann vor jeder senkrechten Reihe Schrittförderer 5. Vorzugsweise ist die Anzahl Aufzüge 9 gleich der Anzahl Zufuhrförderer 1.

Auf der Höhe des Zufuhrförderers 1 ist fest auf dem Rahmen jedes Liftes 9 ein hervorragender Rahmenteil 29 montiert, der eine übergabe vorrichtung 10 trägt. Auf dem Rahmen teil 29 sind ein hydraulischer oder pneumatischer Zylinder 30 oder eine andere Schubvorrichtung montiert sowie zwei geneigte Rollenbahnen 31 und 32. Der Kasten 7 kommt gegen den Rahmenteil 29 zum Stillstand, wird mit Hilfe des Zylinders 30 auf die Rollenbahn 31 geschoben und von dort mittels der Schwerkraft auf die Rollenbahn 32 bis gegen einen Anschlag 33 transportiert.

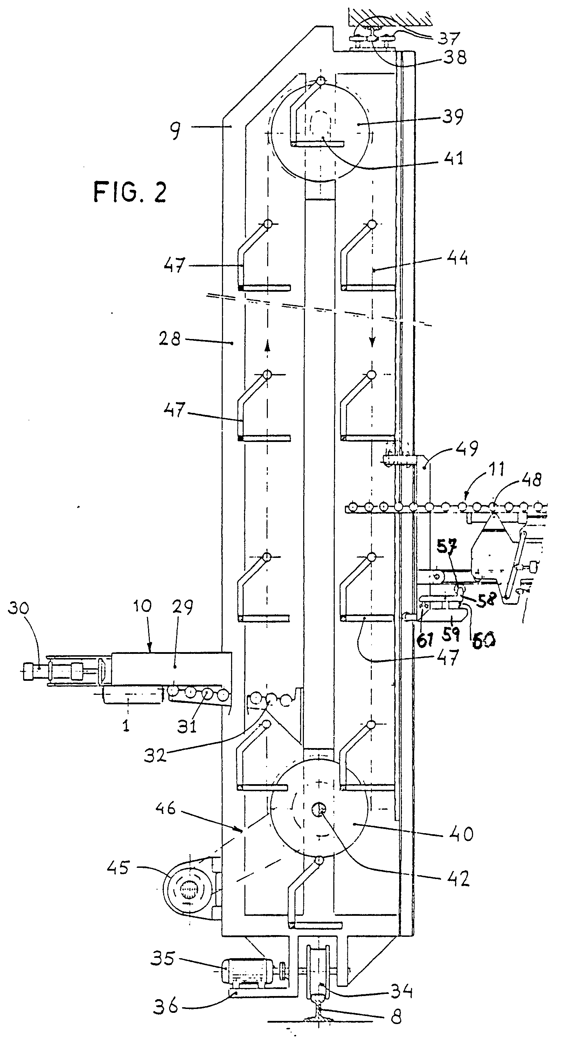

Der Zufuhraufzug 9 ist über die Schiene 8 die Stellage entlang fahrbar mittels zweier oder mehrerer Laufräder 34, die angetrieben werden durch einen Elektromotor 35 auf einer Konsole 36, die fest an dem Gehäuse befestigt ist, und ist an seiner Oberseite mittels zweier Leiträder 37 an einer Schiene 38 abgestützt. In dem Gehäuse 28 des Aufzuges 9 ist an der Oberseite und der Unterseite ein Paar Kettenräder 39 bzw. 40 drehbar gelagert auf Wellen 41 bzw. 42, wovon die obere Welle 41 in Höhenrichtung verstellbar ist. Über die Kettenräder 39 und 40 laufen zwei endlose Ketten 43 und 44, die mit der oberen verstellbaren Welle 41 gespannt werden können. Die Ketten 43 und 44 werden in der Richtung der in Figur 2 gezeichneten Pfeile durch einen Elektromotor 45 und einen Ketten- oder Riemenantrieb 46 angetrieben. An den Ketten 43 und 44 sind Tragschaukeln 47 aufgehängt, womit die Kasten 7 von der Rollenbahn 32 übergenommen werden. Die Schaukeln 47 setzen die Kasten 7 ab auf einen Förderer 48, welcher die Kasten von der Wirkungssphäre der Schaukeln 47 aus transportiert bis innerhalb des Bereiches der Wirkungssphäre des Transportbalkens des Trag-Schrittförderers 5. Das in vertikaler Richtung Verstellen einer Antriebsvorrichtung 11 für die Trag-Schrittförderer 5, wird ermöglicht durch einen Heberahmen 49, der mit Leiträdern 50 versehen ist, welche über Schienen 51 laufen, die an dem Rahmen 28 des Zufuhraufzuges 9 befestigt sind. An der Oberseite des Heberahmens 49 ist ein Elektromotor 52 montiert, der mittels eines Ritzels 53 und einer Zahnstange den Heberahmen 49 den Aufzug 9 entlang hinauf und herunter verstellen kann. Zur Kompensation eventueller Abweichungen in der richtigen Höhe der Antriebsvorrichtung 11 sind der Rollenförderer 48 und ein Antrieb- und Kuppelmechanismus schwenkbar an dem Heberahmen 49 befestigt. An dem Heberahmen 49 ist schwenkbar um eine Welle 55 ein Tragrahmen 56 montiert, der federnd unterstützt ist mittels einer Rolle 57 auf einem Hebel 58, welcher schwenkbar auf einer Konsole 59 des Heberahmens 49 angeordnet und unter der Rolle mittels einer Feder 60 auf der Konsole 59 abgestützt ist, während er mittels der Feder 60 am anderen Ende auf einen Anschlag 61 gedrückt wird.

Die Antriebsvorrichtung 11 weist einen Antriebs- und Kuppelmechanismus 62 auf, womit der Transportbalken des Trag-Schrittförderers angetrieben werden kann. Als Antriebmechanismus kann zum Beispiel ein durch einen hydraulischen oder Elektromotor angetriebenen Kurbelgetriebemechanismus angewandt werden, dessen Konstruktion wohl bekannt ist und deshalb hier nicht näher erläutert zu werden braucht.

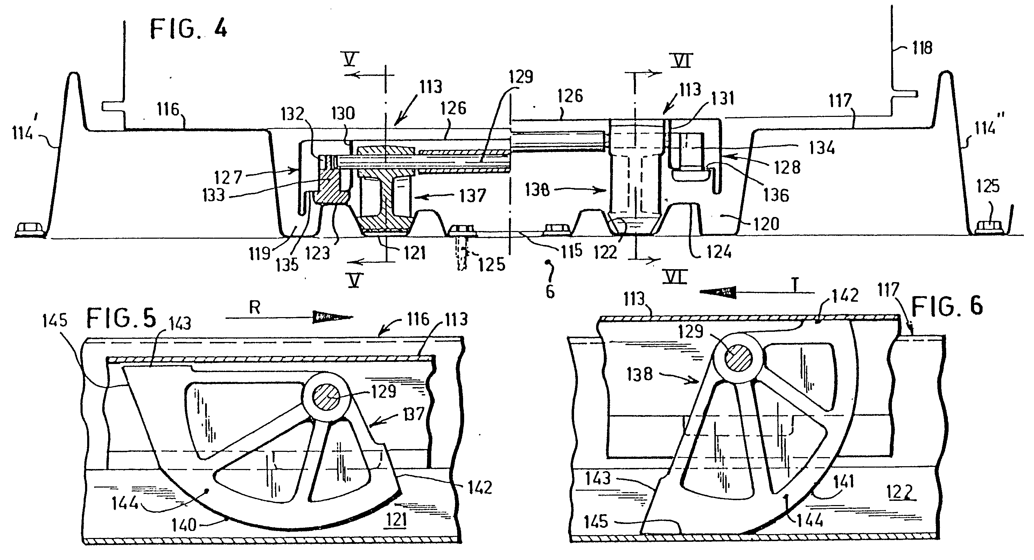

Der Trag-Schrittförderer 5 nach den Figuren 4, 5 und 6 besteht aus einem Transportbalken 113 und einer Tragrinne 114. Sowohl der Transportbalken 113 als auch die Tragrinne 114 können aus kaltgewalztem Stahlblech hergestellt werden und werden mittels Kaltverformung auf einer Profilrollenbank profiliert. Die Tragrinne 114 kann aus einem Stück hergestellt werden, wodurch eine ganz geschlossene Unterseite entsteht, oder, wie in Figur 4 dargestellt ist, aus einem linken Teil 114' und einem rechten Teil 114", wobei zwischen den Teilen 114' und 114" ein Schlitz 115 freigehalten ist. Die Profilierung dieser geteilten Tragrinne 114' und 114" ist derart, dass hierin auch der durch Bruch oder Leckage der Verpackung der Produkte verursachte Schmutz aufgefangen wird.

Die Tragrinne 114 ist mittels Bolzen 125 fest an dem Tragbalken 6 der Lagerungsstellage 2 befestigt. Die Profilierung der Tragrinne 114 ist derart, dass Tragflächen 116 und 117 an beiden Seiten des Transportbalkens 113, auf dem das Produkt ruht, gebildet werden. Die Tragrinne kann weiter mit Abfuhrrillen 119 und 120 für Leckflüssigkeit versehen sein, während an der Innenseite jeder Abfuhrrille 119, 120 eine V-förmige Längsnute 121 bzw. 122 gebildet ist, welche eine Funktion hat beim Transport der Kasten 118, wie nachstehend weiter erläutert werden wird.

Zwischen den Abfuhrrillen 119 und 120 und den V-förmigen Längsnuten 121 und 122 sind Stützflächen 123 und 124 zur Unterstützung des Transportbalkens 113 gebildet, wie nachstehend weiter erläutert werden wird. Der Transportbalken 113 besteht aus einem Profil 126 aus Stahlblech, das an seinen beiden Längsrändern versehen ist mit einem angeformten Profil 127 und 128. Diese Profile 127 und 128 erfüllen eine Funktion bei dem Versteifen des Transportbalkens 113. In diesen Röhrenprofilen sind in gleichem gegenseitigen Abstand eine Anzahl Querwellen 129 gelagert, die durch Bohrungen in den vertikalen Innenwänden 130 und 131 der Röhrenprofile 127 und 128 ragen und die in den Röhrenprofilen mit ihren Enden in Aussparungen 132 von Stützlagern 133 und 134 ruhen, die durch Löcher in der horizontalen Unterseite 135 und 136 der Röhrenprofile 127 und 128 gesteckt sind. Diese Stützlager 133 und 134 ruhen während der rückwärtsgehenden Bewegung und in der Ruhestellung des Transportbalkens 113 auf den Stützflächen 123 und 124 der Tragrinne und tragen dadurch den Transportbalken 113. Gemäss der Erfindung ist der Transportbalken 113 an der Unterseite mit Schwenkbaren Tragesegmenten 137 und 138 versehen, die über den V-förmigen Längsnuten 121 und 122 auf den Querwellen 129 montiert sind. Die Tragesegmente 137 und 138 sind vorzugsweise aus Kunststoff hergestellt. Zwischen den Tragesegmenten 137 und 138 ist auf den Querwellen 129 eine Abstandsbüchse 139 angeordnet. Die Tragesegmente 137 und 138 besitzen nach der Erfindung eine Felge 144 mit einer spiralförmigen Auflauffläche 140 bzw. 141, die an beiden Enden endet in eine Anschlagfläche 142 bzw. 143, deren Funktion nachstehend weiter erläutert werden wird. Gemäss der Erfindung hat weiterhin die Felge 144 einen V-förmigen Querschnitt, dessen Breite im Bereich der spiralförmigen Auflauffläche 140, 141 grösser ist als die Breite des Bodens der V-förmigen Längsnute 121, 122 der Tragrinne 114, und sie ist im Bereich der Anschlagfläche 143 mit einer flachen Gleitfläche 145 versehen, deren Funktion nachstehend weiter erläutert werden wird. Im Bereich der Gleitfläche 145 ist die Breite der Felge 144 kleiner als die des Bodens der V-förmigen Längsnuten 121 und 122.

Jetzt wird die Wirkung des Schrittförderers nach Figur 4 an Hand der Figuren 5 und 6 weiter erläutert werden.

Der Transporthub des Transportbalkens 113 ist in Figur 6 mit dem Pfeile T angegeben und der Rückwärtshub in Figur 5 mit dem Pfeile R. Beim Anfang des Transporthubs T stehen die Tragesegmente 137 und 138 und der Transportbalken 113 in der Stellung, die in Figur 5 gezeichnet ist, wobei die obere Fläche des Transportbalkens 113 unter den Tragflächen 116 und 117 der Tragrinne 114 liegt. Der Transportbalken ruht über die Stützlager 133 und 134 auf den Stützflächen 123 und 124 der Tragrinne 114 (siehe Figur 4). Der Schwerpunkt der Tragesegmente liegt links vor der Welle 129, wodurch das Segment in der Drehrichtung entgegen dem Uhrzeigersinn drehen will (siehe Figur 4).

Diese Drehung wird blockiert, indem die schrägen Seiten der spiralförmigen Auflauffläche 140, 141 der Felge 144 an den schrägen aufstehenden Wänden der V-förmigen Längsnuten 121 und 122 anliegen. Falls nun der Transportbalken 113 von der Zufuhr- oder Entnahmeseite aus in der Richtung des Pfeiles T bewegt wird, sind die Tragesegmente 137 und 138 in Reibungseingriff mit den V-förmigen Längsnuten 121 und 122 und drehen sich entgegen dem Uhrzeigersinn. Die beiden seitlichen V-förmigen Flächen funktionieren in diesem Moment als Laufflächen. Die V-Form der Seitenkante dieser Lauffläche vergrössert das auf das Tragesegment ausgeübte Drehmoment, wodurch die Steigung der Spiralform ziemlich stark sein kann, ohne dass Schlupf stattfindet, wodurch nur ein kurzer Hub in Pfeilrichtung T notwendig ist, um den Tragbalken 113 und darauf die Kasten 118 zu heben. Die Drehbewegung des Tragesegments wird angehalten, indem die Anschlagfläche 142 gegen die Unterseite des Transportbalkens 113 anstösst. Die Gleitflächen 145 der Tragesegmente 137 und 138 stützen sich dann auf den horizontalen Boden der Längsnuten 121, 122, weil die Breite der Felge 144 im Bereich der Gleitfläche 145 kleiner ist als die des Bodens der Längsnuten 121, 122, wie dargestellt worden ist in dem rechten Teil von Figur 4. Die Tragesegmente 137, 138 können dadurch frei in die Transportrichtung T bewegt werden und damit der Transportbalken 113 mit den darauf ruhenden Kasten 118.

Beim Anfang des Rückwärtshubes R stehen die Tragesegmente 137 und 138 in einer Stellung, die in Figur 6 gezeichnet ist. Falls der Transportbalken 113 in der oben beschriebenen Weise in die Richtung R bewegt wird, so drehen die Tragesegmente 137 und 138 in Drehrichtung des Uhrzeigers und wird der Transportbalken mit den Kasten 118 erst niedergelassen, wobei die Kasten 118 auf die Tragflächen 116, 117 gesetzt werden und der Transportbalken sich noch weiter senkt, bis die Tragesegmente die Stellung nach Figur 5 erreicht haben, wobei die Tragesegmente mit der Anschlagfläche 143 gegen die Unterseite des Transportbalkens frei in die Richtung des Pfeiles R bewegt werden können, bis die Ausgangsstellung wieder erreicht worden ist. Während dieser Rückbewegung stützt sich der Transportbalken 113 über die Gleitlager 133 und 134 auf den Gleitflächen 123 und 124 der Tragrinne ab. Hierdurch wird erreicht, dass der breite Teil der Felge 144 des Tragesegments während der Rückbewegung vom eigenen Gewicht des Transportbalkens entlastet ist, wodurch unnötig viel Reibung und besonders Abnützung vorgebeugt wird.

An der Entnahmeseite der Lagerungsstellage 2 befinden sich eine oder mehrere Entnahmehebevorrichtungen in Form von fahrbaren Paternoseraufzüge 12, die in derselben Weise ausgeführt sind wie die Paternosteraufzüge 9 an der Zufuhrseite. Diese Aufzüge 12 sind versehen mit einer in vertikaler Richtung verstellbaren Kastenübernahmevorrichtung (nicht gezeichnet). Auch diese Kastenübernahmevorrichtungen sind mit einem Antrieb- und Kuppelmechanismus versehen, um den Transportbalken des jeweiligen Schrittförderers von der Entnahmeseite her antreiben zu können.

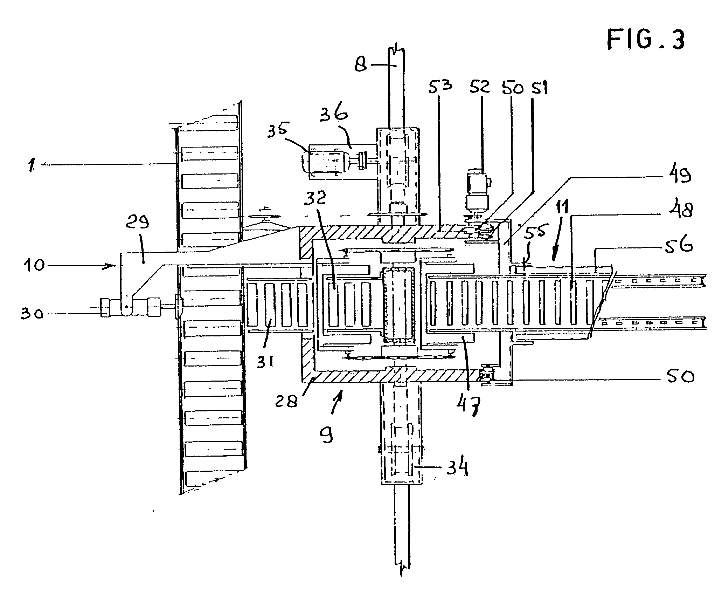

Die Ausführung des Antrieb- und Kuppelmechanismus an der Entnahmeseite ist identisch mit der an der Zufuhrseite. Mit Hilfe der nicht gezeichneten Kastenübernahmevorrichtung mit Antrieb- und Kuppelmechanismus können die Kasten 7 aus den Förderern 5 in den Aufzug 12 übergebracht werden, der in umgekehrter Richtung wirkt wie der Auszug 9 und der die Kasten von der Übernahmevorrichtung übernimmt und auf eine nicht gezeichnete Übergabevorrichtung absetzt, welche in der gleicher Weise konstruiert ist wie die Vorrichtung 10 nach den Figuren 2 und 3, aber in umgekehrter Richtung wirkt und welche die Kasten 7 aus dem Aufzug 12 auf einen ersten Entnahmeförderer 13 überbringt, dessen Konstruktion mit derjenigen des Zufuhrförderers 1 übereinstimmt.

Falls die Entnahmeaufzüge 12 nur benutzt werden für das Sammeln von Aufträgen, werden die auf den Förderer 13 abgesetzte Kasten weitertransportiert zur Distribution. Eine Auftragssammeleinrichtung 18 ist dann nicht notwendig.

Falls jedoch eine schnellere Methode von Auftragssammlung notwendig ist, werden die Kasten 7 mittels einer Überschiebeeinrichtung 14 auf einen geneigten Förderer 15 übergebracht, der die Kasten 7 auf einen quer verlaufenden Verteilförderer 16 absetzt, der die Kasten 7 bis zu einem Überschieber 17 transportiert. Der Kastenüberschieber 17 setzt die Kasten 7 auf eine der Kastenpufferbahnen 18. Jede Pufferbahn 18 ist bestimmt für das zeitweilige Lagern einer Anzahl Kasten 7, welche gefüllt sind mit nur einer Produktsorte. Nach Figur 1 sind zwei Etagen von nebeneinander angeordneten Pufferbahnen 18 angewandt, aber selbstverständlich können, falls notwendig, mehr als zwei übereinander liegende Etagen von Pufferbahnen 18 angewandt werden. Die Anzahl Pufferbahnen 18 in jeder Etage ist gleich der Anzahl Produktsorten, die abgeliefert werden muss. Vorzugsweise sind die Pufferbahnen 18 unter der Lagerungsstellage 2 angeordnet, um die benötigte Bodenfläche für die Lagerungsvorrichtung so klein wie möglich zu halten. Die Pufferbahnen 18 sind vorzugsweise als geneigt aufgestellte Rollenbahnen ausgeführt, worauf die Kasten 7 durch die Schwerkraft zum untersten Ende der Bahn rollen und ins Stocken geraten gegen einen nicht gezeichneten Anschlag oder gegen einen vorhergehenden Kasten. Am Ende jeder Pufferbahn 18 ist ein Übergabemechanismus (nicht gezeichnet) montiert, der die Kasten von der Bahn 18 auf eine der Auftragssammelbahnen 19 und 20, die bestehen aus angetriebenen Rollenförderern, überbringt. Auf den Auftragssammelbahnen 19 und 20 können die für einen Auftrag benötigten Kasten gesammelt und in Pfeilrichtung für die weitere Behandlung weitertransportiert werden. Dadurch, dass mehrere Etagen Pufferbahnen übereinander angeordnet sind, wobei jede Etage einen eigenen Auftragssammelförderer besitzt, können die Kasten für mehrere Aufträge gleichzeitig gesammelt werden.

Die oben umschriebene Wirkung der Installation ist gemeint für Einheiten, zum Beispiel Kasten, die eine ziemlich grosse Umsatzgeschwindigkeit haben (sogenannte « Schnelläufer »). Die Pufferbahnen 18 mit Überbringern und die Auftragssammelbahnen 19 und 20 ermöglichen es, aus diesen Schnelläufern bestehende Aufträge schnell sammeln zu können. Der Puffervorrat dieser Kasten kann gross sein in Hinsicht auf die Anzahl benötigter Auftragssammelbahnen. Über diese Pufferbahnen werden verhältnismässig viele Kasten verarbeitet.

Die Sache liegt anders mit den Kasten mit einer kleinen Umsatzgeschwindigkeit (sogenannte « Langsamläufer »). Die Verschiedenheit der in diesen Trägern oder Kasten anwesenden Artikel kann in einigen Fällen sehr gross sein. Nehmen wir als Beispiel fünfzehnhundert verschiedene Artikel oder Verpackungen, wovon zum Beispiel zweihundert Schnelläufer und dreizehnhundert Langsamläufer sind. Wenn diese Artikel in derselben Weise behandelt würden wie die Schnelläufer, so würden insgesamt fünfzehnhundert Pufferbahnen 18 nebeneinander benötigt. Die Produktionslagerung dagegen würde in Hinsicht auf die grosse Anzahl Pufferbahnen klein sein. Die Sammelfrequenz der Langsamläufer ist sehr niedrig. Hierdurch ist für diese Artikel ein anderes Verfahren möglich. Die Installation kann aufgeteilt werden in einen für die « Schnelläufer » und in einen für die « Langsamläufer » bestimmten Teil.

In dem für die Langsamläufer bestimmten Teil werden die Pufferbahnen 18 jetzt benützt um Teilaufträge, bestehend aus Langsamläufern, aufzunehmen. Gibt es zum Beispiel fünfzig Pufferbahnen, dann nehmen die Aufzüge 12 für fünfzig Aufträge die Artikel aus der Lagerung und zwar Artikel nach Artikel. Die Anzahl Einheiten eines Artikels wird zu den fünfzig Pufferbahnen gebracht und darüber verteilt, wobei ein Komputer die Anzahl Einheiten bestimmt, welche den einzelnen Bahnen zugeführt wird. In dieser Weise werden auf den Pufferbahnen bereits Teilaufträge zusammengesetzt.

Sind alle für die fünfzig Aufträge benötigten Artikel übergebracht worden, dann liegen fünfzig Teilaufträge fertig, um als Ergänzung für die Schnelläufer zu dienen. Die Teilaufträge müssen also auf den Pufferbahnen 18 fertig liegen, bevor das Zusammensetzen der Aufträge anfängt. Die Aufzüge 12 können erst wieder mit dem Zusammensetzen der nächsten fünfzig Teilaufträge anfangen, wenn die vorhergehenden Teilaufträge alle abgeliefert worden sind. Dies würde bedeuten, dass das Zusammensetzen der Restaufträge warten müsste, bis die Aufzüge 12 wieder aufs neue die nächsten fünfzig Teilaufträge zusammengesetzt haben.

Um dieser Diskontinuität vorzubeugen, können entweder (a) die fünfzig Pufferbahnen 18 für die Langsamläufer in doppelter Anzahl (= hundert) ausgeführt und abwechselnd benutzt werden oder (b) fünfzig Pufferbahnen in der Mitte versehen sein mit (nicht angegebenen) Gegenhälter oder « Sperren ». Während der Zusammensetzung der Aufträge laufen die Kasten gegen diese Sperren.

Sind die Teilaufträge zusammengesetzt worden, dann werden diese fünfzig Aufträge alle gleichzeitig durchgelassen zu der zweiten Hälfte der Pufferbahnen, nachdem die Sperren oder Gegenhälter wieder hochgeben. Die durchgelassenen Aufträge sind dann fertig für die Komplettierung, während die Aufzüge 12 sofort anfangen können mit der Zusammensetzung der nächsten Teilaufträge auf der ersten Hälfte der Pufferbahnen 18.

Weil die Aufzüge 12 für die Zusammensetzung der Teilaufträge häufig fahren müssen und die Übergabevorrichtung sehr oft in der Höhe verstellt werden muss, geht die Zusammensetzung der Teilaufträge langsamer als die Überbringung der Schnelläufer mittels Pufferbahnen mit Übergabevorrichtungen. Weil jedoch nur wenige Einheiten pro Zeiteinheit übergebracht zu werden brauchen, kann dieses System für die Langsamläufer angewandt werden. Das Sammeln mittels des Entnahmeaufzuges und das Lagern eines Teilauftrags auf den Rollenbahnen vermindert erheblich die Anzahl benötigter Rollenbahnen. Die Anzahl benötigter Pufferbahnen für Langsamläufer würde zum Beispiel fünfzig sein können, so dass auch fünfzig Teilaufträge fertig liegen zur Ergänzung. Für die Zusammensetzung von Aufträgen in der uniformen Weise würden fünfzehnhundert Rollenbahnen nötig sein, wovon die meisten dann nur ab und zu eine Einheit durchlassen würden. Bei der getrennten Arbeitsweise sind für die Schnelläufer zum Beispiel etwa zweihundert Rollenbahnen nötig und für die Langsamläufer die angenommenen fünfzig, so dass die Einsparung an Rollenbahnen erheblich ist.

Für einige umfangreiche Teilaufträge kann gelegentlich mehr als eine Pufferbahn benützt werden. In der oben umschriebenen Weise ist es wirtschaftlich möglich, aus Schnelläufern und Langsamläufern bestehende Aufträge automatisch und komputergesteuert zusammenzusetzen.

Das von Hand Komplettieren von automatisch zusammengesetzten Aufträgen von Einheiten hoher Umsatzgeschwindigkeit mit Einheiten geringer Umsatzgeschwindigkeit würde zur Folge haben, dass die Arbeit aufgeteilt werden müsste in einen automatischen und einen nicht automatischen Teil. Dies würde viele Kontroll- und Arbeitshandlungen implizieren. Die Zusammenstellungskosten würden dann unverhältnismässig steigen. Man soll danach streben, die Gesamtaufträge so weit wie möglich automatisiert und komputergesteuert zusammenzusetzen, was gemäss der hieroben beschriebenen Arbeitsweise möglich ist. Wo genau getrennt werden soll zwischen Langsamläufern und Schnelläufern, hängt ab von vielen Faktoren, die teilweise erst richtig in der Praxis beurteilt werden können. Glücklicherweise ist es so, dass die mechanische Ausführung der Installation nach beiden Systemen fast gleich ist. Laut (a) sind diese sogar ganz gleich. Der Unterschied besteht nur in der Steuerung. Das nachträgliche Ändern der Scheidelinie ist denn auch ohne viele Umstände möglich.

Die obenbeschriebene (nicht gezeichnete) Überbringvorrichtung der Entnahmeaufzüge 12 kann die Kasten aus den Aufzügen überbringen auf einen zweiten Entnahmeförderer 21, der die Kasten 7 einer Einheitensammelstation 22 zuführt. Die Kasten 7 werden mittels einer Überbringvorrichtung 23 übergebracht auf eine der Bahnen 24 der Einheitensammelstation 22 (Flow-rack). Diese Bahnen 24 liegen nebeneinander in einer Anzahl übereinander liegender Etagen, wobei die Anzahl Bahnen 24 mindestens gleich ist der Anzahl Produktsorten. Die Bahnen 24 bestehen aus geneigten Rollenbahnen, worauf die Kasten 7 durch die Schwerkraft nach vorne transportiert werden bis gegen einen Anschlag. Die in der Station 22 gelagerten Kasten sind homogene Kasten, wobei jeder Kasten eine Produktsorte enthält.

An der Vorderseite der Station 22 ist ein Förderer 25 angeordnet. Auf der Station 22 kann ein Bedienungsmann einen leeren Kasten mit den für den diesbezüglichen Auftrag benötigten Anzahlen Verpackungseinheiten verschiedener Produkte füllen. Dabei kann ein Kasten zum Beispiel gefüllt werden mit einer Anzahl Flaschen Milch, einer Anzahl Flaschen Krem, einer Anzahl Flaschen Joghurt usw. Der Bedienungsmann stellt den gefüllten heterogenen Kasten mit verschiedenen Produkten auf den Förderer 25, der den Kasten über eine Weiche 26 und ein Tor 27 zu einem der Auftragssammelförderer 19 und 20 transportieren kann, wo der Kasten dem diesbezüglichen Auftrag hinzugefügt werden kann. In der Einheitensammelstation 22 können Displays angebracht sein, worauf die für jeden Auftrag benötigten Verpackungseinheiten angegeben sind. Dies erleichtert das Zusammensetzen der Kasten mit verschiedenen Produkten.

Die oben beschriebene Lagerungsvorrichtung kann mittels eines Komputers gesteuert werden, der den Aufangs- und Endpunkt der Wirkung der verschiedenen Förderer, Antriebs-, Überbring- und Übersetztvorrichtungen bestimmt und ausserdem die Reihenfolge der Wirkung dieser Einrichtungen steuert, alles in Abhängigkeit der Reihenfolge und der Grösse der Aufträge für verschiedene Produkte.

**Patentansprüche**

1. Lagerungseinrichtung für Produkte unter Benutzung von Trägern (7), bestehend aus einer eine Anzahl von Etagen (4) umfassenden Stellage (2) mit einer Zufuhrseite und einer gegenüberliegenden Entnahmeseite, wobei an der Zufuhrseite mindestens ein Zufuhrförderer (1) und mindestens eine längs dieser Seite verfahrbare Zufuhrhebevorrichtung (9) mit einer Einrichtung für das Einbringen der Träger (7) in die Stellage (2) sowie an der Entnahmeseite mindestens eine längs dieser verfahrbare Entnahmehebevorrichtung (12) und mindestens ein Entnahmeförderer (13) angeordnet sind, mit mindestens einem Förderer (5) in jeder Etage (4) der Stellage (2), welcher auf der Entnahmeseite der Stellage (2) mit einer an der Entnahmehebevorrichtung (12) vertikal verfahrbar angeordneten Antriebsvorrichtung kuppelbar ist, dadurch gekennzeichnet, dass auch an der Zufuhrhebevorrichtung (9) eine Antriebsvorrichtung (11) vertikal verfahrbar angeordnet ist, welche jeweils mit dem zufuhrseitigen Ende eines Förderers (5) kuppelbar ist und dass jeder Förderer ein Trag-Schrittförderer (5) ist, bestehend aus einer profilierten Tragrinne (114), deren Bodenteil in Längsrichtung mit zwei Tragflächen (116, 117), zwei V-förmigen Nuten (121, 122) und zwei Stützflächen (123, 124) versehen ist, und aus einem profilierten Trag-Transportbalken (113) mit ebener Oberseite, welcher an der Unterseite mit quer zur Transportrichtung montierten Wellen (129) versehen ist, auf welchen Tragsegmente (137, 138) schwenkbar montiert sind, welche Tragsegmente (137, 138) eine Felge (144) mit einer spiralförmigen Auflauffläche (140, 141) mit Anschlagflächen (142, 143) und einer Gleitfläche (145) besitzen, wobei der Querschnitt der Felge (144) V-förmig ist, mit im Bereich der spiralförmigen Auflauffläche (140, 141) grösserer und im Bereich der Gleitfläche (145) kleinerer Breite als die Breite des Bodens der V-förmigen Nuten (121) in der Tragrinne (114).

2. Lagerungseinrichtung nach Anspruch 1, dadurch gekennzeichnet, dass der Trag-Schrittförderer (5) aus kaltgewalzten Profilen aus Stahlblech besteht.

3. Lagerungseinrichtung nach Anspruch 1 oder 2, dadurch gekennzeichnet, dass die Tragrinne (114) aus einem linken (114') und einem rechten Teil (114") besteht.

4. Lagerungseinrichtung nach einem der vorhergehenden Ansprüche, dadurch gekennzeichnet, dass die Entnahmehebeeinrichtung (12) versehen ist mit einer Überbringeinrichtung für die Träger (7) auf den Entnahmeförderer (13), welche mittels Förderer (14-17) verbunden ist mit einem Puffermagazin, welches besteht aus mindestens einer Sammelbahn (18) für jedes abzuliefernde Produkt und dass jede Sammelbahn an ihrem Ende versehen ist mit einem Mechanismus, der die Träger auf einen Auftragssammelförderer (19, 20) übersetzen kann.

5. Lagerungseinrichtung nach Anspruch 4, dadurch gekennzeichnet dass die Überbringeinrichtung die Träger (7) von der Entnahmehebeeinrichtung (12) auf einen zweiten Entnahmeförderer (21) überbringen kann, der die Träger über andere Förderer (23) einer Handauftragsammelstation (22) zuführen kann, in der ein oder mehrere Träger mit verschiedenen Produkten pro Träger von Hand gefüllt werden können und die mit einem Abfuhrförderer (25) versehen ist, der diese Träger auf den Auftragssammelförderer (19, 20) überbringen kann.

## Claims

1. A storage plant for products, in which supporting means (7) are used, comprising a staging (2), having a plurality of storeys (4), an entry side and an opposite exit side, said entry side being provided with at least one supply conveyor (1) and at least one entry elevating device (9), movable along said entry side, said entry elevating device having means for introducing said supporting means (7) into said staging (2), as well as at least one exit elevating device (12), movable along said exit side, and at least one exit conveyor (13) ; with at least one conveyor (5) in every storey (4) of the staging, which conveyor can be coupled to a driving means — verticaly movable on said exit elevating device (12) — at the exit side of said staging (2), characterized in that a driving means (11) is vertically movable on the entry elevating device (9) as well, which driving means can be coupled to the entry side of a conveyor (5), and in that each conveyor is a step-conveyor, comprising a profiled bearing trough (114), its bottom portion being provided with two bearing surfaces (116, 117), two V-shaped grooves (121, 122) and two supporting surfaces (123, 124) in longitudinal direction, and a profiled conveyor beam (113) with a flat upper side, said conveyor beam being provided at the bottom side with shafts (129) that are mounted transversely with respect to the direction of travel, bearing segments (137, 138) being pivotably mounted on said shafts, said bearing segments (137, 138) having a rim (144) with a spiral tread (140, 141) with stop surfaces and a glide surface (145), the cross section of said rim (144) being V-shaped, with a width that, in the region of the spiral tread (140, 141), is larger than, and in the region of the glide surface (145), is smaller than the width of the bottom of said V-shaped groove (121) in said bearing trough (114).

2. A storage plant according to claim 1, characterized in that the step conveyor (5) consists of cold-rolled profiles made from steel-plate.

3. A storage plant according to claim 1 or 2, characterized in that the bearing trough (114) consists of a left (114') and a right portion (114").

4. A storage plant according to any of the preceding claims, characterized in that the exit elevating device (12) is provided with a transmitting device for the supporting means (7) onto the exit conveyor (13), which is connected to a buffer store comprising at least one collecting path (18) for each product that is to be delivered and in that each collecting path is provided with a mechanism at its end, which mechanism can transfer said supporting means onto an order collecting conveyor (19, 20).

5. A storage plant according to claim 4, characterized in that the transfer means can transfer the supporting means (7) from the exit elevating device (12) onto a second exit conveyor (21) that can convey said supporting means over other conveyors (23) to a manual order collecting station (22), at which one or more supporting means can be filled by hand with various products, said manual order collecting station being provided with a discharge conveyor (25) that can transfer said supporting means onto said order collecting conveyor.

## Revendications

1. Dispositif d'emmagasinage pour produits à l'aide de supports (7), comportant un échafaudage (2) constitué de plusieurs étages (4) et ayant un côté d'amenée et un côté d'évacuation y opposé, au côté d'amenée étant prévu au moins un transporteur d'amenée (1) et au moins un dispositif de levage d'amenée (9) qui est déplaçable le long de ce côté et qui comporte un mécanisme pour introduire les supports (7) dans l'échafaudage (2), et au côté d'évacuation étant prévu au moins un dispositif de levage d'évacuation (12) qui est déplaçable le long de ce côté et au moins un transporteur d'évacuation (13), et comportant sur chaque étage (4) de l'échafaudage (2) au moins un transporteur qui peut être accouplé à un dispositif d'entraînement lequel est déplaçable verticalement au dispositif de levage d'évacuation (12), caractérisé en ce qu'un dispositif d'entraînement (11) est également déplaçable verticalement au dispositif de levage d'amenée (9), ce premier dispositif pouvant pourtant être accouplé à l'extrémité d'amenée d'un transporteur (5), et en ce que chaque transporteur est un transporteur pas à pas (5) constitué par une gouttière porteuse profilée (114) dont le fond est pourvu dans le sens longitudinal de deux surfaces porteuses (116, 117), de deux rainures en V (121, 122) et de deux surfaces d'appui (123, 124), et par une poutre de transport profilée (113) à côté supérieur plan et sur le côté inférieur de laquelle sont montés des arbres (129) transversaux à la direction du transport et portant par articulation des segments porteurs (137, 138) ayant une jante (144) à bande de roulement en spirale (140, 141) munie de plans de butée (142, 143) et d'un plan de glissement (145), la section transversale de la jante (144) étant en forme de V, et sa largeur étant à l'endroit de la bande de roulement en spirale (140, 141) supérieur à et à l'endroit du plan de glissement (145) inférieur à la largeur du fond des rainures en V (121) dans la gouttière porteuse (114).

2. Dispositif d'emmagasinage selon la revendication 1, caractérisé en ce que le transporteur pas à pas (5) et constitué de profilés en tôle et laminés à froid.

3. Dispositif d'emmagasinage selon la revendication 1 ou 2, caractérisé en ce que la gouttière porteuse (144) est constituée d'une partie gauche (114') et d'une partie droite (114'').

4. Dispositif d'emmagasinage selon l'une quelconque des revendications précédentes, caractérisé en ce que le dispositif de levage d'évacuation (12) est pourvu d'un appareil de transfert pour les supports (7) sur le transporteur d'évacuation (13) lequel est relié par des transporteurs (14-17) à un magasin-tampon formé d'au moins une voie collectuée (18) pour chaque produit à délivrer, et en ce que chaque voie collectuée est munie à son extrémité d'un mécanisme susceptible de transférer les supports sur un transporteur collecteur d'ordres (19, 20).

5. Dispositif d'emmagasinage selon la revendication 4, caractérisé en ce que l'appareil de transfert peut transférer les supports (7) du dispositif de levage d'évacuation (12) sur un second transporteur d'évacuation (21) susceptible de conduire les supports à travers d'autres transporteurs (23) à un poste collecteur d'ordres manuel (22) où un ou plusieurs supports peuvent être remplis manuellement de divers produits par support et qui est pourvu d'un transporteur d'écoulement (25) pouvant transférer ces supports sur le transporteur collecteur d'ordres (19, 20).

FIG.1

0 035 818

FIG. 2

0 035 818

FIG.3

FIG. 4

FIG. 5

FIG. 6